# EUROPEAN PATENT SPECIFICATION

(11) **EP 3 082 408 B1**
(45) Date of publication and mention of the grant of the patent: **31.01.2018**
(21) Application number: 14821122.0
(22) Date of filing: 16.12.2014
(51) Int. Cl.: A01J 25/00, A01J 25/11

(54) **LIQUID/SOLID SEPARATOR**
FLÜSSIGKEITS-/FESTSTOFFABSCHEIDER
SÉPARATEUR LIQUIDE/SOLIDE

(30) Priority: 20.12.2013 SE 1351543
(43) Date of publication of application: 26.10.2016
(73) Proprietor: Tetra Laval Holdings & Finance S.A., 1009 Pully (CH)
(72) Inventor: BLOEMSMA, Lammert, 13950 Jakarta Timur (ID)
(74) Representative: Tetra Pak - Patent Attorneys SE
(86) International application number: PCT/EP2014/077899
(87) International publication number: WO 2015/091440

(56) References cited:
- DE-A1- 1 492 786
- DE-C1- 3 720 961
- SU-A1- 931 134
- SU-A1- 1 123 601

## Description

### Field of the Invention

The present invention pertains to liquid/solid separator, as well as a method of operating such separator. More particularly, the present invention pertains to a separator having a screen plate for use in whey/curd separation in manufacturing of cheese, as well as a method of operating such separator.

### Background of the Invention

When separating whey from curd in cheese production, often a perforated or meshed screen plate is used. The curd/whey mixture from the curd making tanks is pumped to the top of a whey separator, comprising a whey drainage screen. The whey will pass through the perforations or meshes, while the curd particles will not. The screen plate is often arranged in an angled position, such that gravity of the curd will decide residence time over the screen plate.

However, in cheese production different parts of a batch will have different composition, rendering the whey/curd separation on such plates inconsistent over time. Put in other words, the different parts of the batch would need different residence time on the plate, for the separated curd to have a uniform and consistent composition, such as a uniform and constant moisture content, since residence time is believed to influence curd composition.

Hitherto, the only way of influencing the residence time has been to change the angle of the screen plate during the manufacturing process. However, change of plate angle will affect residence time over the entire plate momentarily, since the angle then will change uniformly over the screen plate. Since the length of the screen plate is significant, it becomes difficult to control the residence time, or perhaps more precisely the effect of the change in residence time. Additionally, screen plates are rather space consuming.

There is thus a need for a liquid/solid separator, such as a separator in the field of whey/curd separators in cheese manufacturing, providing a more space efficient alternative, and an alternative way of changing residence time of the curd within the separator without changing angling of the screen plate, being compatible with such more space efficient alternative.
Further prior art is reflected by patent documents DE 3720961 C1 and SU 931134 A1.

### Summary of the Invention

Accordingly, the present invention preferably seeks to mitigate, alleviate or eliminate one or more of the above-identified deficiencies in the art and disadvantages singly or in any combination and solves at least the above mentioned problems by providing a separator for separating a liquid from a solid, said separator comprising: a housing with a longitudinal central axis, said housing having a top and a bottom; an inlet for a mixture of said liquid and solid at the top of the housing; a solid outlet arranged at the bottom of the housing; a liquid outlet arranged at the bottom of the housing; a conical screen plate, arranged within said housing, said conical screen plate dividing the interior of the housing into a solid collecting chamber and a liquid collecting chamber, said inlet running into said solid collecting chamber and said solid outlet running out from said solid collecting chamber, and said liquid outlet running out from said liquid collecting chamber; wherein said conical screen plate is suspended in said housing, on a rotatable shaft (108) in its upper end through upper struts or a stay plate (109), such that the conical screen plate is rotatable around a longitudinal axis. A method of operating such a separator is also provided.

Further advantageous embodiments of the present invention are embodied in the appended patent claims.

### Brief Description of the Drawings

These and other aspects, features and advantages of which the invention is capable of will be apparent and elucidated from the following description of embodiments of the present invention, reference being made to the accompanying drawings, in which
Fig. 1 is a side view of a separator according to one embodiment of the present invention, and
Fig. 2 is a schematic view of a method according to one embodiment.

### Description of embodiments

The following description focuses on embodiments of separators for separating fluid from solids, as well as a method for separating fluid from solids. More particularly, the following description focuses on embodiments of separators for separating whey from curd in cheese production, such as a whey drainage screen separator, as well as a method for separating whey from curd in cheese production.

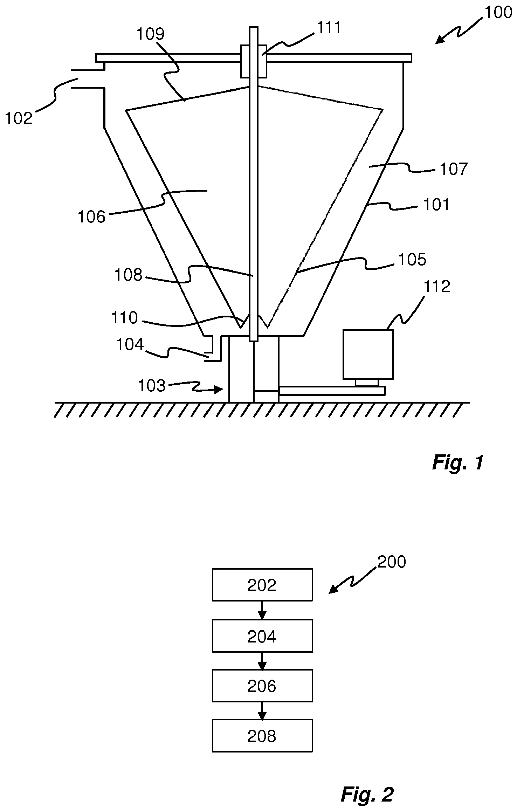

Fig. 1 discloses a liquid/solid separator 100 in form of a whey/curd separator 100. The separator 100 comprises a housing 101. The housing 101 forms a hollow body, e.g. by having a conical or cylindrical shape, and is preferably made of stainless steel. Thus, the housing 101 has a longitudinal central axis. At the top of the housing 101, the separator 100 is provided with an inlet 102 for a whey/curd mixture. At the bottom, the housing 101 of the separator 100 is provided with a curd outlet 103. The curd outlet 103 is arranged centrally of the cylindrical housing 101.The housing 101 is also provided with a whey outlet 104 at the bottom.

Within the housing 101a screen plate 105 is arranged. The screen plate 105 is cone shaped, with a wider upper end and a narrower lower end. Also, the screen plate 105 is provided with perforations or meshes, allowing for the whey to pass through said perforations or meshes in order to be separated from the curd. Thus, the whey/curd mixture will be introduced into the separator 100 on a curd collecting chamber 106 side, and will slide along the inner periphery of the screen plate 105, such that whey passes through the perforations or meshes into a whey collecting chamber 107, said whey collecting chamber 107 being in fluid communication with the whey outlet 104.

Centrally, along the central axis of the housing 101, a shaft 108 is arranged. The conical screen plate 105 is suspended in its upper end to the shaft 108 through upper struts or a stay plate 109. At its lower end the conical screen plate 105 is suspended on the shaft 108 via struts 110. The central shaft 108 is in turn suspended in the housing 101 by means of bearings and bushings 111.

The shaft 108 may be rotated around its axis, coinciding with the central axis of the housing 101, by the use of an electrical motor 112, in a known manner. However, it should be realized that the rotational axis of the rotating screen plate 105 not necessarily must be coinciding with the longitudinal central axis of the housing 101. In some embodiment, the rotational axis of the screen plate 109 may be arranged in parallel with the longitudinal central axis of the housing 101. In other embodiments, the rotational axis of the screen plate 109 may be tilted relative the longitudinal central axis of the housing 101.

When the shaft 108 starts to rotate, also the conical screen plate 105 will start to rotate around the same axis. When the conical screen 105 rotates, the friction between the curd on the inner peripheral surface of the conical screen plate 105 increases, whereby residence time may be increased/controlled. Due to the tapered configuration of the conical screen plate 105, also the friction will decrease while moving downwards along the central axis, since the radius will decrease. In this way, it will also be possible to compensate for the natural friction increase downwards along the conical screen plate, as the moisture content in the curd decreases. Hence, a more uniform friction over the entire screen plate area 105 will be obtained. Also, by changing rotational speed of the shaft 108, the friction between the curd and the conical screen 105 may be macroscopically changed, allowing for easy adjustment corresponding to change in curd/whey mixture, in turn resulting in a more variable, reliable, and controllable residence time. Still further, the residence time may be increased by increasing the speed of rotation of shaft 108, and thus the rotational speed of the conical screen plate 105 to such degree that whey film covering curd particles are removed, since it is believed that longer residence time enforces such film removal. An additional beneficial effect of this arrangement is that the residence time of the curd may be increased even further, i.e. by increasing the speed of rotation of shaft 108, for example in the case of interruptions downstream the separator 100, whereby the curd may be held in the separator 100 until the cause of such interruptions are removed.

Now turning to Fig. 2, a method 200 according to an embodiment will be described. The method 200 is provided in order to separate solids and liquid from a mixture of solids and liquid. In a preferred embodiment, the method 200 is performed for separating curd particles from a mixture of curd and whey. Hence, the method 200 is particularly suitable in cheese manufacturing, in which the separation of whey from curd particles is of high importance.

The method 200 begins with a step 202 of allowing a mixture of solids and liquid, such as a mixture of whey and curd, to enter a housing 101 of a separator 100. Step 202 is followed by a step 204 in which the mixture is allowed to flow onto a screen plate 105. The screen plate 105 is suspended relative the housing 101 by means of bearings, and the screen plate 105 is further connected to driving means, such as an electrical motor for allowing the screen plate 109 to rotate in accordance with the description made with respect to Fig. 1. For this, the screen plate 105 is connected to a rotational shaft 108 by means of radial struts 110, 109 extending from the rotational shaft 108 to the screen plate 105.

In step 206 the screen plate 105 is rotated in order to control the residence time of the mixture on the screen plate 105. Preferably, the screen plate 105 is continuously rotated during operation of the separator whereby step 206 is always performed during operation. During normal operation, all of the steps 202, 204, 206 may be performed in parallel and at the same time, thus allowing the method to be performed for a continuous supply of curd and whey mixture.

The method 200 may in some embodiments also comprise a further step 208, in which the moisture content of the separated curd particles is measured, and wherein the rotational speed of the screen plate 105 is adjusted using the moisture content as input. Hence, if the moisture content exceeds a predetermined threshold the rotational speed is adjusted such that the residence time of the mixture is changed accordingly. Further, step 208 may be performed automatically e.g. in situations in which the raw material is changed. The method 200 may thus be configured to apply predetermined settings with respect to the rotational speed of the screen plate 105, which predetermined settings are defined with respect to specific parameters of the whey and curd mixture. Such specific parameters may e.g. be density, rheology, size of curd particles, temperature, etc.

Although the present invention has been described above with reference to specific embodiments, it is not intended to be limited to the specific form set forth herein. Rather, the invention is limited only by the accompanying claims.

In the claims, the term "comprises/comprising" does not exclude the presence of other elements or steps. Furthermore, although individually listed, a plurality of means, elements or method steps may be implemented by e.g. a single unit or processor. The terms "a", "an", "first", "second" etc do not preclude a plurality. Reference signs in the claims are provided merely as a clarifying example and shall not be construed as limiting the scope of the claims in any way.

## Claims

1. A separator (100) for separating a liquid from a solid, said separator (100) comprising:
a housing (101) with a longitudinal central axis, said housing (101) having a top and a bottom;
an inlet (102) for a mixture of said liquid and solid at the top of the housing (101);
a solid outlet (103) arranged at the bottom of the housing (101);
a liquid outlet (104) arranged at the bottom of the housing (101);
a screen plate (105), arranged within said housing (101), said screen plate (105) dividing the interior of the housing into a solid collecting chamber (106) and a liquid collecting chamber (107), said inlet (102) running into said solid collecting chamber (106) and said solid outlet (103) running out from said solid collecting chamber (106), and said liquid outlet (104) running out from said liquid collecting chamber;
**characterised in that** said screen plate (105) is a conical screen plate, which is suspended in said housing (101), on a rotatable shaft (108) in its upper end through upper struts or a stay plate (109), such that the conical screen plate (105) is rotatable around a longitudinal axis.

2. The separator (100) according to claim 1, further comprising a rotatable shaft (108) extending along an axis being parallel or coinciding with the longitudinal central axis of the housing (101), wherein said conical screen plate (105) is suspended on said rotatable shaft (108), such that the conical screen plate (105) is rotatable around said axis.

3. The separator (100) according to any of the preceding claims, wherein the separator (100) is a whey/curd separator.

4. The separator (100) according to any of the preceding claims, wherein the solid outlet (103) is arranged centrally of said housing (101).

5. The separator (100) according to any of the preceding claims, wherein the conical screen plate (105) is made of stainless steel and is provided with perforations or meshes.

6. A method for separating a solid from a liquid in a separator (100) with a housing (101) having a central longitudinal axis, said method comprising the steps of:
introducing a mixture of said solid and said liquid on a first side of a conical screen plate (105), said conical screen plate (105) dividing the interior of the housing (101) into a solid collecting chamber (106) and a liquid collecting chamber (107) and being suspended in the housing (101), on a rotatable shaft (108) in its upper end through upper struts or a stay plate (109) such that the conical screen plate (105) is rotatable around the longitudinal axis;
rotating said conical screen plate (105) around the longitudinal axis, whereby solids will advance downwards along the conical screen plate (105) to a solid outlet (103) of said housing (101) and said liquid will go through said conical screen plate (105) into the liquid collecting chamber (107) and advancing downwards to a liquid outlet (104).

7. The method according to claim 6, wherein the method is a method for separating whey from curd in a cheese manufacturing process.

## Patentansprüche

1. Abscheidevorrichtung (100) zum Abscheiden einer Flüssigkeit von einem Feststoff, wobei die Abscheidevorrichtung (100) Folgendes umfasst:
ein Gehäuse (101) mit einer Längsmittelachse, wobei das Gehäuse (101) eine Oberseite und eine Unterseite hat,
einen Einlass (102) für ein Gemisch aus der Flüssigkeit und dem Feststoff an der Oberseite des Gehäuses (101),
einen an der Unterseite des Gehäuses (101) angeordneten Feststoffauslass (103),
einen an der Unterseite des Gehäuses (101) angeordneten Flüssigkeitsauslass (104),
eine konische Siebplatte (105), die im Gehäuse (101) angeordnet ist, wobei die konische Siebplatte (105) das Innere des Gehäuses in eine Feststoffsammelkammer (106) und eine Flüssigkeitssammelkammer (107) unterteilt, wobei der Einlass (102) in die Feststoffsammelkammer (106) hineinläuft und der Feststoffauslass (103) aus der Feststoffsammelkammer (106) herausläuft und wobei der Flüssigkeitsauslass (104) aus der Flüssigkeitssammelkammer herausläuft,
**dadurch gekennzeichnet, dass** die konische Siebplatte (105) an einer drehbaren Welle (108) in ihrem oberen Ende durch obere Streben oder eine Versteifungsplatte (109) im Gehäuse (101) aufgehängt ist, so dass die konische Siebplatte (105) um eine Längsachse drehbar ist.

2. Abscheidevorrichtung (100) nach Anspruch 1, ferner umfassend eine drehbare Welle (108), die sich entlang einer Achse erstreckt, die parallel zu der Längsmittelachse des Gehäuses (101) verläuft oder mit ihr zusammenfällt, wobei die konische Siebplatte (105) an der drehbaren Welle (108) aufgehängt ist, so dass die konische Siebplatte (105) um die Achse drehbar ist.

3. Abscheidevorrichtung (100) nach einem der vorhergehenden Ansprüche, wobei die Abscheidevorrichtung (100) eine Molke/Käsebruch-Abscheidevorrichtung ist.

4. Abscheidevorrichtung (100) nach einem der vorhergehenden Ansprüche, wobei der Feststoffauslass (103) mittig zum Gehäuse (101) angeordnet ist.

5. Abscheidevorrichtung (100) nach einem der vorhergehenden Ansprüche, wobei die konische Siebplatte (105) aus Edelstahl hergestellt ist und mit Perforationen oder einem Gitter versehen ist.

6. Verfahren zum Abscheiden eines Feststoffs von einer Flüssigkeit in einer Abscheidevorrichtung (100) mit einem Gehäuse (101), das eine Längsmittelachse hat, wobei das Verfahren die folgenden Schritte umfasst:
Einführen eines Gemischs aus dem Feststoff und der Flüssigkeit an einer ersten Seite einer konischen Siebplatte (105), wobei die konische Siebplatte (105) das Innere des Gehäuses (101) in eine Feststoffsammelkammer (106) und eine Flüssigkeitssammelkammer (107) unterteilt und an einer drehbaren Welle (108) in ihrem oberen Ende durch obere Streben oder eine Versteifungsplatte (109) im Gehäuse (101) aufgehängt ist, so dass die konische Siebplatte (105) um die Längsachse drehbar ist,
Drehen der konischen Siebplatte (105) um die Längsachse, wodurch sich die Feststoffe entlang der konischen Siebplatte (105) nach unten zu einem Feststoffauslass (103) des Gehäuses (101) bewegen und die Flüssigkeit durch die konische Siebplatte (105) in die Flüssigkeitssammelkammer (107) geht und sich nach unten zu einem Flüssigkeitsauslass (104) bewegt.

7. Verfahren nach Anspruch 6, wobei das Verfahren ein Verfahren zum Abscheiden von Molke von Käsebruch in einem Käseherstellungsverfahren ist.

## Revendications

1. Séparateur (100) pour séparer un liquide d'une matière solide, ledit séparateur (100) comprenant :
un logement (101) présentant un axe médian longitudinal, ledit logement (101) comportant une partie supérieure et une partie inférieure ;
une entrée (102) pour un mélange desdits liquide et matière solide au niveau de la partie supérieure du logement (101) ;
une sortie de matière solide (103) disposée au niveau de la partie inférieure du logement (101) ;
une sortie de liquide (104) disposée au niveau de la partie inférieure du logement (101) ;
une plaque de filtration conique (105), disposée à l'intérieur dudit logement (101), ladite plaque de filtration conique (105) divisant l'intérieur du logement en une chambre de collecte de matière solide (106) et une chambre de collecte de liquide (107), ladite entrée (102) s'étendant dans ladite chambre de collecte de matière solide (106), et ladite sortie de matière solide (103) s'étendant à partir de ladite chambre de collecte de matière solide (106), et ladite sortie de liquide (104) s'étendant à partir de ladite chambre de collecte de liquide ;
**caractérisé en ce que** ladite plaque de filtration conique (105) est suspendue dans ledit logement (101), sur un arbre rotatif (108) dans son extrémité supérieure par le biais de supports supérieurs ou d'une plaque de renfort (109), de telle sorte que la plaque de filtration conique (105) soit rotative autour d'un axe longitudinal.

2. Séparateur (100) selon la revendication 1, comprenant en outre un arbre rotatif (108) s'étendant le long d'un axe parallèle à l'axe médian longitudinal du logement (101) ou coïncidant avec celui-ci, dans lequel ladite plaque de filtration conique (105) est suspendue sur ledit arbre rotatif (108), de telle sorte que la plaque de filtration conique (105) soit rotative autour dudit axe.

3. Séparateur (100) selon l'une quelconque des revendications précédentes, dans lequel le séparateur (100) est un séparateur de lactosérum et de caillé.

4. Séparateur (100) selon l'une quelconque des revendications précédentes, dans lequel la sortie de matière solide (103) est disposée au centre dudit logement (101).

5. Séparateur (100) selon l'une quelconque des revendications précédentes, dans lequel la plaque de filtration conique (105) est constituée d'acier inoxydable et est pourvue de perforations ou de mailles.

6. Procédé pour séparer une matière solide d'un liquide dans un séparateur (100) comportant un logement (101) présentant un axe médian longitudinal, ledit procédé comprenant les étapes suivantes :
introduire un mélange de ladite matière solide et dudit liquide sur un premier côté d'une plaque de filtration conique (105), ladite plaque de filtration conique (105) divisant l'intérieur du logement (101) en une chambre de collecte de matière solide (106) et une chambre de collecte de liquide (107) et étant suspendue dans le logement (101), sur un arbre rotatif (108) dans son extrémité supérieure par le biais de supports supérieurs ou d'une plaque de renfort (109), de telle sorte que la plaque de filtration conique (105) soit rotative autour de l'axe longitudinal ;
mettre ladite plaque de filtration conique (105) en rotation autour de l'axe longitudinal, les matières solides avançant alors vers le bas le long de la plaque de filtration conique (105) jusqu'à une sortie de matière solide (103) dudit logement (101) et ledit liquide passant à travers ladite plaque de filtration conique (105) et dans la chambre de collecte de liquide (107) et avançant vers le bas jusqu'à une sortie de liquide (104).

7. Procédé selon la revendication 6, le procédé étant un procédé pour séparer le lactosérum du caillé dans un procédé de fabrication de fromage.
